(19) **Europäisches Patentamt / European Patent Office / Office européen des brevets**

(11) **EP 3 286 951 B1**

(12) **EUROPEAN PATENT SPECIFICATION**

(45) Date of publication and mention
of the grant of the patent:
**26.06.2019 Bulletin 2019/26**

(21) Application number: **16897334.5**

(22) Date of filing: **31.03.2016**

(51) Int Cl.:
*H04W 24/08* (2009.01)          *H04W 24/02* (2009.01)
*H04W 8/02* (2009.01)            *H04W 88/08* (2009.01)
*H04W 36/30* (2009.01)           *H04W 36/08* (2009.01)
*H04B 17/318* (2015.01)          *H04W 84/12* (2009.01)

(86) International application number:
**PCT/US2016/025224**

(87) International publication number:
**WO 2017/171788 (05.10.2017 Gazette 2017/40)**

(54) **CALCULATION OF AN EQUIVALENT ISOTROPIC RADIATED POWER (EIRP) OF A REFERENCE ACCESS POINT (AP) IN A NETWORK WHEN PREDETERMINED CONDITIONS ARE SATISFIED**

BERECHNUNG EINER ÄQUIVALENTEN ISOTROPEN STRAHLUNGSLEISTUNG (EIRP) EINES REFERENZZUGANGSPUNKTES (AP) IN EINEM NETZWERK, WENN VORBESTIMMTE BEDINGUNGEN ERFÜLLT WERDEN

CALCUL D'UNE PUISSANCE ISOTROPE RAYONNÉE ÉQUIVALENTE (EIPR) D'UN POINT D'ACCÈS (AP) DE RÉFÉRENCE DANS UN RÉSEAU LORSQUE DES CONDITIONS PRÉDÉTERMINÉES SONT SATISFAITES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.02.2018 Bulletin 2018/09**

(73) Proprietor: **Hewlett Packard Enterprise Development LP**
**Houston, TX 77070 (US)**

(72) Inventors:
• **LEE, Jiwoong**
**Sunnyvale, California 94089 (US)**
• **GANU, Sachin**
**Sunnyvale, California 94089 (US)**
• **NARASIMHAN, Partha**
**Sunnyvale, California 94089 (US)**

(74) Representative: **Haseltine Lake Kempner LLP**
**Redcliff Quay**
**120 Redcliff Street**
**Bristol BS1 6HU (GB)**

(56) References cited:
WO-A1-2016/011337          US-A1- 2009 190 500
US-A1- 2013 077 505         US-A1- 2015 098 392
US-A1- 2015 181 408         US-A1- 2016 033 613
US-A1- 2016 037 458

• SIAUD ISABELLE ET AL: "Adaptive and Spatial Processing for Millimeter Wave Backhaul Architectures", 2015 IEEE INTERNATIONAL CONFERENCE ON UBIQUITOUS WIRELESS BROADBAND (ICUWB), IEEE, 4 October 2015 (2015-10-04), pages 1-6, XP032809323, DOI: 10.1109/ICUWB.2015.7324420 [retrieved on 2015-11-10]

**Description**

BACKGROUND

A wireless network is a shared medium, meaning that all clients and access points (APs) on the same channel compete for the same limited bandwidth. Each client's throughput varies depending on the data rate it is using at any given point in time, and this data rate may, in some cases, vary multiple times per second.

Some background information can be found in US 2016/037458 A1.

SUMMARY OF THE INVENTION

The invention relates to a method according to claim 1, to an apparatus according to claim 7, to a non-transitory machine-readable storage medium according to claim 12 and to a system according to claim 15. Further embodiments are defined in the dependent claims.

BRIEF DESCRIPTION OF THE DRAWINGS

FIG. 1 shows a wireless network that comprises examples of access points according to the present disclosure.

FIG. 2 shows an example of a reference AP according to the present disclosure associated with different Received Signal Strength Indicator (RSSI) levels in a wireless network.

FIG. 3 shows an example of a reference AP according to the present disclosure associated with an area of coverage of a high Modulation and Coding Scheme (MCS) zone and an area of coverage of a sticky zone in a wireless network.

FIG. 4A and 4B show examples of reference AP's according to the present disclosure and the relation between an equivalent isotropic radiated power (EIRP) value and a size of a high MCS zone and a sticky zone associated with the reference AP's.

FIG. 5 shows an example of a linear distribution of AP's according to the present disclosure.

FIGS. 6A, 6B and 6C show examples of network topologies according to the present disclosure.

FIGS. 7A and 7B show examples of flowcharts for EIRP calculation according to the present disclosure.

FIGS. 8A and 8B show examples of reference access points for EIRP calculation according to the present disclosure.

DETAILED DESCRIPTION

RSSI perturbations suffered at the client device, RF interference sources, inconsistent RF coverage and other factors could alter a client device's instantaneous data rate leading to low data-rate connections and delays. A Received Signal Strength Indicator (RSSI) level can be a measurement of the power present in a received radio signal from an access point at a wireless client.

Network wireless devices operating in a wireless network may suffer a sticky behavior when dealing with roaming between access points within the wireless network. An access point (AP) can be a device that allow wireless clients to connect to a wireless network using Wi-Fi, Bluetooth or related standards. Examples of access points are a router, a switching hub, a network bridge, an Ethernet switch, etc. A wireless client can be a computing device that can communicate to one or more access points AP's (AP) in a wireless network. Example of wireless clients can be mobile phone device, table, laptop, wearable device or the like.

In some networks, a wireless client may have access points providing ubiquitous coverage across the network providing consistent client coverage. In this scenario, the wireless client may roam from AP to AP detecting and connecting to its closest AP throughout the coverage area to ensure the best connection speed at all times. However, in other scenarios, a wireless client connected to a reference access point may suffer of sticky behavior, i.e. the wireless client may see a closest AP at a higher RSSI level than a predefined roaming level while remaining connected to the reference access point. A reference access point can be an access point that may be used as a reference to calculate a RSSI level.

The EIRP control aimed to provide a large RF coverage, with minimum coverage redundancy and coverage hole simultaneously. Equivalent Isotropic Radiated Power (EIRP) can be a power level of the signal transmitted by an access point. The coverage driven design philosophy was regarded to work properly when the Wi-Fi line speed was low and not diverse, when clients were mostly stationary and when the cost-effectiveness of the RF network was measured as minimum number of AP's to be deployed to cover a fixed area.

However, the coverage driven design does not reflect the ultimate user experience very well. Slow clients may consume more airtime when transferring a given amount of data leaving less airtime for other clients in a cell. Airtime hogging by client devices experiencing these issues may decrease overall throughput capacity and degrade performance within the network. Hence, achieving an optimum airtime use could lead to better and more perceivable user experience. This may be achieved by controlling the AP EIRP that could minimize airtime for given traffic demand, maintain high MCS's and obtain low medium access average delay. High MCS's are the group Modulation Coding Schemes (MCS) that comprise MCS7, MCS 8 and MCS9 for IEEE 802.11 ac 40 MHz bandwidth. Hence, a control EIRP coverage design that can be implemented in wireless networks and that considers the mentioned constraints for optimization of airtime usage forms the foundation of the present disclosure.

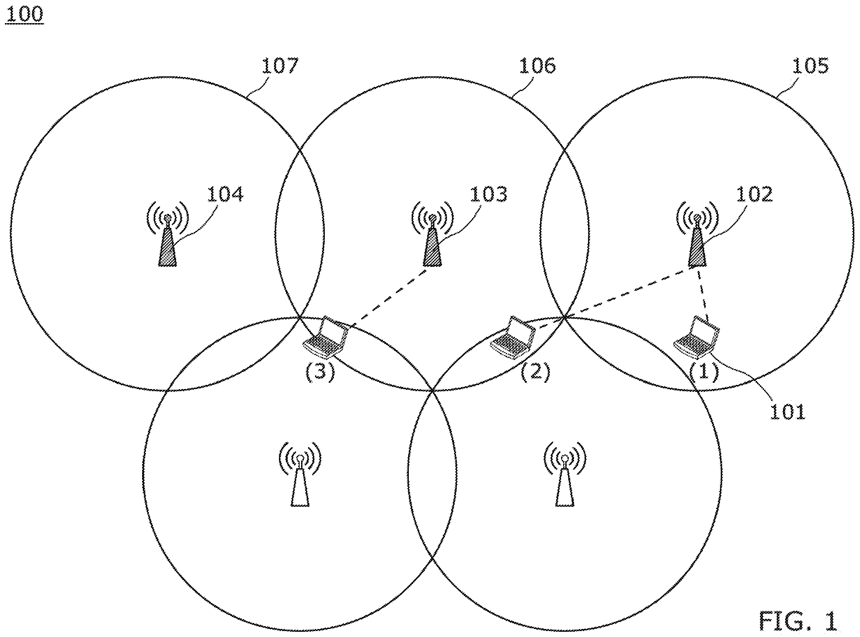

FIG. 1 shows an example of an operating wireless network 100 supporting connection of a wireless client 101. The wireless network 100 comprises several access points that may provide Wi-Fi coverage across the whole wireless network 100. These several AP's are examples of access points for airtime control through the calculation of an EIRP value of a reference AP. The wireless network 100 comprises a reference AP 102, a first immediate AP 103 and a second immediate AP 104. An immediate access point can be an access point located in a near location of the reference access point. In order to calculate the EIRP value, the example access points shown in the example of FIG. 1 may achieve a balance between minimizing the sticky behavior by shortening a sticky zone of the wireless client 101 and maximizing a high MCS zone within the network 100. The sticky zone can be a zone in the wireless network having a reference access point, an immediate access point and a wireless client connected to the reference access point, where the wireless client can see the signal from the immediate access point at a higher RSSI level than a roaming level while remaining connected to the reference access point.

The high MCS zone can be a zone where which the wireless client may operate at high MCS's if the measured RSSI threshold at the wireless client can be greater or equal to -67dBm.

This balance may be achieved by calculating a RSSI level for the reference AP 102 when predetermined conditions are satisfied and by calculating the EIRP of the reference AP 102 such that the wireless client 101 can measure the calculated RSSI level when the wireless client 101 may be within the range of the first immediate AP 103. Predetermined conditions can be conditions in the wireless network that may achieve a balance between maximizing the high MCS zone and minimizing the sticky zone. Calculating the EIRP may be based on a measured path-loss between the reference AP 102 and the first immediate AP 103. Path-loss can be an attenuation of the radio signal as it propagates through space.

A first predetermined condition to be satisfied in order to calculate the RSSI level that can achieve a balance between minimizing the wireless client's sticky behavior by shortening the sticky zone of the wireless client 101 and maximizing the high MCS zone within the network 100 may comprise the wireless client 101 being within a high MCS zone of an access point within the network. As shown in Figure 1, the wireless client 101 may be within a high MCS zone 105 of the reference AP 102, or within the high MCS zone 106 of the first immediate AP 103, or within both or within any other high MCS zone a e.g. a high MCS zone 107 of the second immediate AP 104.

A second predetermined condition to be satisfied in order to calculate the RSSI level that can achieve a balance between minimizing the wireless client's sticky behavior by shortening the sticky zone of the wireless client 101 and maximizing the high MCS zone within the network 100 may comprise the wireless client 101 roaming to the first immediate AP 103 but has not come within range of the second immediate AP 104.

The wireless client 101 may connect to reference the AP 102 when it accesses the wireless network 100. The reference AP 102 may have the calculated EIRP according to the present disclosure. As the wireless client 101 may be in close proximity to the reference AP 102 it may see the reference AP 102 at a high signal level and experience low levels of frame loss and retransmissions. Hence, the client may choose to connect to the reference AP 102 and achieve a full potential connection speed as shown in FIG.1 (see FIG. 1, position (1)).

Sometimes the wireless client 101 may be away from the reference AP 102 and may approach the first immediate AP 103. The wireless client 101 may notice that the signal level from the reference AP 102 starts to drop off until it reaches the calculated RSSI level at the first immediate AP 103 location according to the present disclosure. The calculated RSSI level can satisfy the above mentioned predetermined conditions. When approaching the first immediate AP 103, the wireless client 101 may drop its connection moving to a lower speed in order to maintain its current connection to the reference AP 102 showing a sticky behavior if the wireless client 101 sees the signal from the immediate AP 103 at a higher RSSI level than a roaming level while remaining connected to the reference AP 102 (see FIG. 1, position (2)).

The wireless client 101 may keep moving away from the reference AP 102 and moving closer to the second immediate AP 104.

As the calculated RSSI value can satisfy the first and second conditions, regarding the first condition, the wireless client 101 can be within the high MCS zone 105 of the reference AP 102 or within the high MCS zone 106 of the first immediate AP 103, within both zones or within any other combination of high MCS zones as shown in FIG.1. Hence, the first predetermined condition can be satisfied.

Regarding the second condition, the wireless client 101 can roam to the first immediate AP 103 and achieve a full potential connection speed again before being within the range of the second immediate AP 104 (see FIG. 1, position (3)).

Hence, the wireless client 101 may not suffer a severe sticky behavior by achieving the above mentioned predetermined conditions when calculating the RSSI level and the EIRP. Thus, by avoiding a severe sticky behavior the airtime use allocated for wireless client 101 can be controlled.

The AP's of FIG.1 can comprise a non-transitory machine-readable storage medium encoded with instructions executable by a processor according to an example of the present disclosure. The machine-readable storage medium can comprise instructions to calculate, when the predetermined conditions may be satisfied, the RSSI level for the reference AP 102 in the network 100 and instructions to calculate the EIRP of the reference AP 102 such that the wireless client 101 can measure the selected RSSI level when the wireless client 101 may be within range of the first immediate AP 103.

Calculating the EIRP can be based on adding the path-loss value measured between the reference AP 102 and the first immediate AP 103 to the RSSI level. The predetermined conditions can be satisfied when the wireless client 101 may be within a high MCS zone of an AP within the network and the wireless client 101 may roam to the first immediate AP 103 but has not come within range of the second immediate AP 104.

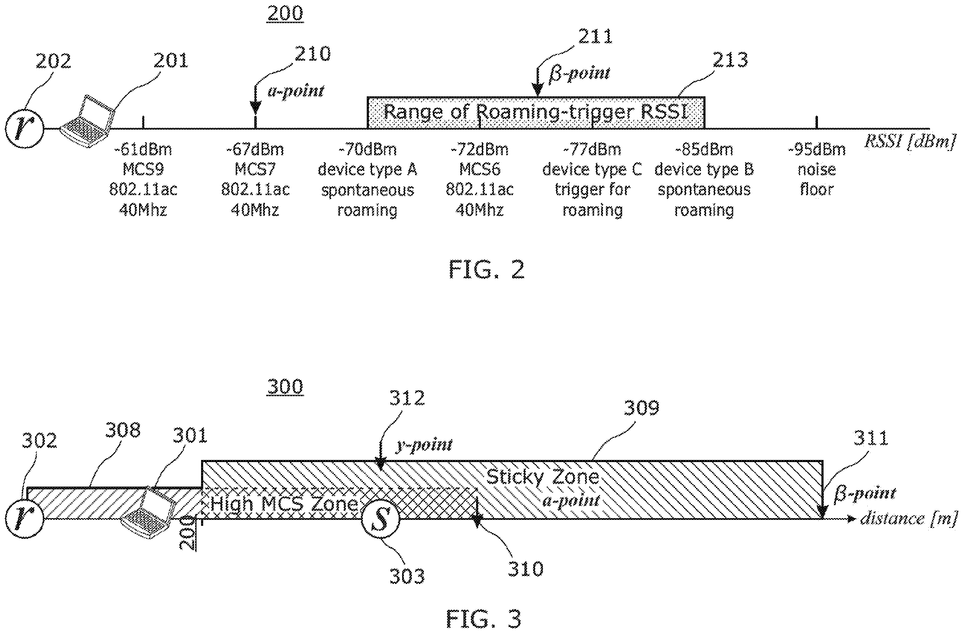

FIG. 2 shows a wireless network 200 comprising a reference AP r 202 having a calculated $EIRP_r$ according to examples of the present disclosure and a wireless client 201. The wireless client 201 may measure a range of RSSI levels from the reference $AP_r$ 202.

The different RSSI levels that can be measured at the wireless client 201 based on the distance are shown in FIG. 2. These RSSI levels may be associated to the high MCS's and to the roaming of the wireless client 201 as well as the noise floor within the wireless network 200. There exist common RSSIs levels that may be considered in RF communications:

- A RSSI threshold of -61 dBm for MCS9 for IEEE 802.11 ac 40Mhz,
- A RSSI threshold of -67 dBm for MCS7 for IEEE 802.11 ac 40Mhz,
- A RSSI threshold of -70 dBm for device type A spontaneous roaming,
- A RSSI threshold of -77 dBm for device type C trigger for roaming,
- A RSSI threshold of -85 dBm for device type B spontaneous roaming,
- A RSSI threshold of -95 dBm for noise floor.

FIG.2 shows the reference AP r 202 and the wireless client 201 its relation to the range of above mentioned RSSI levels based on the distance increase between the reference AP r 202 and the wireless client 201. As it can be seen in FIG.2, reference AP r 202 and wireless client 201 can be located at a distance that may be defined by the RSSI levels of the reference AP r 202. The wireless client 201 may communicate with the reference AP r 202 as long as the RSSI level may be greater than the noise floor threshold of -95dBm shown in FIG. 2.

Given the noise floor of -95 dBm, the wireless client 201 may operate at high MCS's when the wireless client 201 operates at MCS7 or MCS9 for IEEE 802.11 ac 40 MHz bandwidth if the RSSI level measured at the client can be greater than or equal to -67dBm. The RSSI threshold that can sustain a high MCS is shown in Figure 2 as $\alpha$-point 210.

The wireless client 201 in FIG. 2 may roam at different RSSI levels according to the example of wireless network 200 of the present disclosure. The wireless client 201 my roam either spontaneously or forcefully in the wireless network 200. Forcefully roaming can be a RSSI level for roaming of the wireless client at which the infrastructure wireless network may force the wireless client to roam. Spontaneously roaming can be a RSSI level for roaming of the wireless client at which the wireless client may roam by itself based on internal roaming decisions. In some examples of wireless clients 201, a device type A may roam spontaneously at RSSI of -70dBm. A device type B may roam spontaneously at -85dBm RSSI. Device type C may trigger the wireless client 201 to roam at -77dBm RSSI. In Figure 2, the client's roaming trigger RSSI is shown as $\beta$-point 211 and the range of roaming 213 for this example covers the RSSI range of -70dBm to -85dBm. Roaming trigger can be a RSSI level at which the wireless client can roam.

FIG. 3 shows a wireless network 300 according to an example of the present disclosure comprising a reference AP r 302, an immediate AP S 303 and a wireless client 301 located between the reference AP r 302 and the immediate AP S 303.

Based on the RSSI levels previously mentioned and on $\alpha$-point 310 and $\beta$-point 311, FIG.3 shows two RSSI zones:

The first RSSI zone shown in FIG. 3 can be called a high MCS zone 308 that can comprise the radial area from the reference AP r 302 to $\alpha$-point 310. The high MCS zone 308 can be the area where the wireless client 301 may operate at MCS7 or higher.

The second RSSI zone shown in FIG. 3 can be called sticky zone 309 that can comprise the area where the wireless client 301 can see the immediate AP S 303 at a higher RSSI level than $\beta$-point 311 while remaining connected to the reference AP r 302. When the reference AP r 302 and immediate AP S 303 have the same EIRP level, the sticky zone 309 may start from the midpoint 415 between the reference AP r 302 and immediate AP S 303 and end at $\beta$-point 311 as shown in FIG.3. As it can be seen in FIG.3, the sticky zone 309 of the reference AP r 302 can overlap with the high MCS zone 308 of the reference AP r 302 in this particular example. Furthermore, FIG.3 shows γ-point 312 that can be the RSSI level from the reference AP r 302 measured by the wireless client 301 at immediate AP S 303 location.

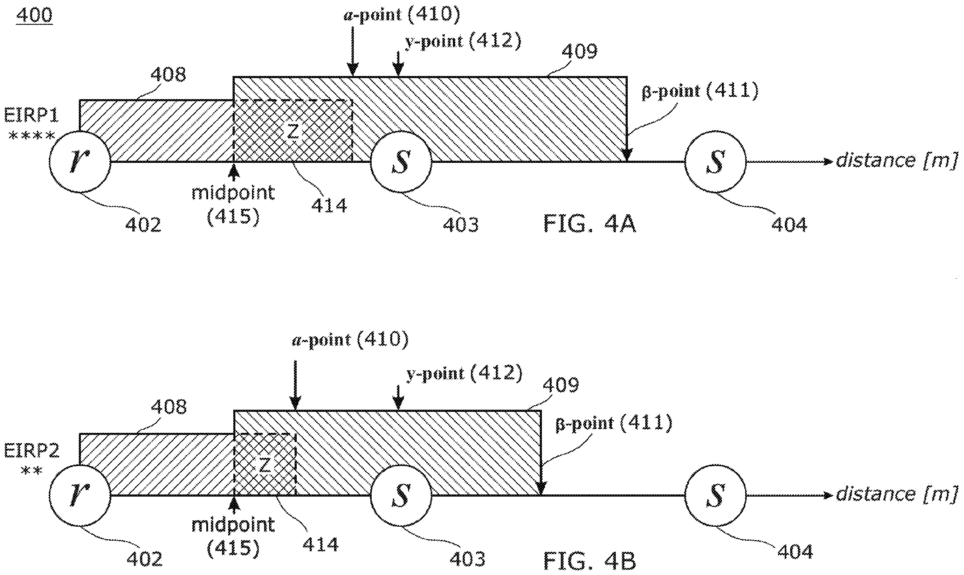

FIG. 4A and FIG. 4B show two examples of a wireless network 400 comprising a reference AP r 402, a first immediate AP S 403 and a second immediate AP S 404 according to the present disclosure and an overlapping area Z 414 defined between a high MCS zone 408 and a sticky zone 409. Furthermore, FIGS.4A and 4B show α-point 410, β-point 411 and γ-point 412. FIGS.4A and 4B show the effect of changing the $EIRP_r$ of the reference AP r 402.

FIG. 4A shows that a first $EIRP_1$ in the reference AP r 402 may cause the high MCS zone 408 and the sticky zone 409 with an overlapping area Z 414. This overlapping area may be considerably large and can occupy almost the midpoint 415 distance between the reference AP r 402 and the first immediate AP S 403.

FIG. 4B shows that a second $EIRP_2$ having a lower value than the first $EIRP_1$ of FIG.4A may cause the shrink of the high MCS zone 408 and the sticky zone 409 as well as the decrease of the overlapping area Z 414.

In an ideal situation the high MCS zone 408 should be maximized and the sticky zone 409 minimized. However, the high MCS zone 408 and the sticky zone 409 may expand or shrink together and the overlapping area Z 414 may increase or decrease accordingly based on the $EIRP_r$ value as shown in FIGS. 4A and 4B. Therefore, maximizing the high MCS zone 408 and minimizing the sticky zone 409 simultaneously may not be possible. Hence, achieving a balance between increasing as much as possible the high MCS zone 408 and shortening the most the sticky zone 409 achieving a convenient overlapping area Z 414 can be pursued.

A solution to achieve a balance between maximizing the high MCS zone 408 and minimizing the sticky zone 409 can be obtained when the following predetermined conditions can be satisfied to calculate γ-point 412:

- First predetermined condition: a randomly sprinkled stationary wireless client in the network may be within a high MCS zone, i.e. there should not be high MCS holes in the network. MCS hole can be a zone in the wireless network where the wireless client cannot operate at high MCS's.

- Second predetermined condition: the wireless client slowly should roam into a first immediate AP before the wireless client coming within range of a second immediate AP.

As it can be observed in FIGS. 4A, having the reference AP r 402 with $EIRP_1$, the first predetermined condition can be achieved as the High MCS zone 408 surpasses the midpoint 415 between midpoint distance between the reference AP r 402 and the first immediate AP S 403. Moreover, the second predetermined condition can also be achieved as the RSSI level for roaming of a wireless client, i.e. β-point 411 appears before reaching the second immediate AP S 404.

As it can be observed in FIGS. 4B, having the reference AP r 402 with $EIRP_2$, the first predetermined condition can be achieved as the High MCS zone 408 surpasses the midpoint 415 between midpoint distance between the reference AP r 402 and the first immediate AP S 403. Moreover, the second predetermined condition can also be achieved as the RSSI level for roaming of a wireless client, i.e. β-point 411 appears before reaching the second immediate AP S 404.

Hence, first and second predetermined conditions can be satisfied when calculating the γ-point 412, i.e. the RSSI level from reference AP r 402 measured at the first immediate AP S 403 location.

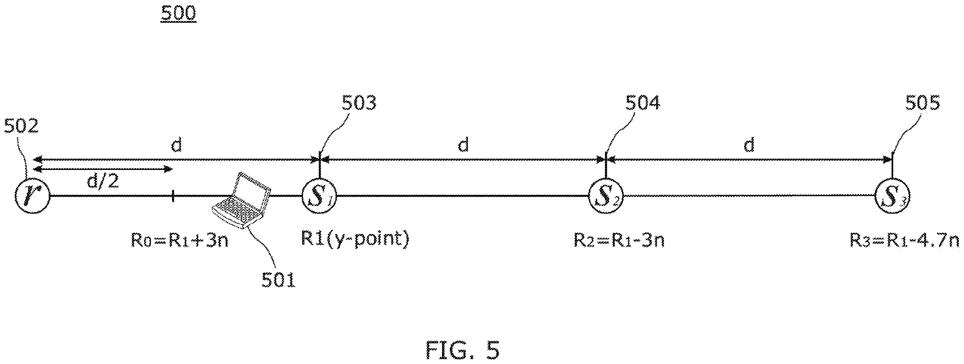

FIG. 5 shows a linear network distribution of AP's in an example of a wireless network 500 according to the present disclosure. This wireless network 500 comprises a reference AP r 502, a first immediate AP S1 503, a second immediate AP S2 504 and a third immediate AP S3 505. In this example, the AP's have the same EIRP level and the inter access point distance is equal. Wireless network 500 includes a wireless client 501 located between the reference AP r 502 and the first immediate AP S1 503.

A numerical example carried based on the example wireless network 500 selects a suitable γ-point that can satisfy the first and the second predetermined conditions previously mentioned. In this numerical example, three values γ-point are chosen, in particular γ-point = [-60, -70, -80] dBm. As mentioned before, γ-point can be the RSSI value from reference AP r 502 measured at the first immediate AP S1 503 location. The numerical example calculates the RSSI level at R0, R2 and R3 locations as shown in FIG.5 and considers R1 the γ-point.

R0 is the RSSI level at the midpoint location between the reference AP r 502 and the first immediate AP S1 503. The RSSI level at the first immediate AP S1 503 at distance d from the reference AP r 502 is R1 (γ-point). R2 is the RSSI level at the second immediate AP S2 504 at distance 2d from the reference AP r 502. R3 is the RSSI level at the third immediate AP S3 505 at distance 3d from the reference AP r 502. The RSSI levels of R0, R2 and R3 can be formulated based on R1 as shown in FIG. 5.

Considering the linear network topology shown in FIG. 5 where inter AP distance d is equal, then the RSSI level that may be measured at k-th immediate AP from the reference AP r 502 may have the following relation:

Let n be a path-loss model decay factor, the relation is affine in decay factor n, and therefore it should not be sensitive to the choice of n. Hence, n = [2.5, 3.5] may be a reasonable choice for analysis for this numerical example.

Log-Normal path-loss model defines the relation between geometrical distance d and the path-loss L:

$$L(d)=10 \, n \, \log d + a$$

where a is constant.

When a transmitter transmits with power T, the received power (RSSI) at distance d is R(d) = T - L(d). Hence:

$$R(2d)= T - L(2d). \quad R(d)- R(2d)=$$

$$10 n \log 2d - 10n \log d = 10n \log 2 = 3n.$$

Thus:

$$R(2d) = R(d) - 3n.$$

Similarly:

$$R(3d) = R(d) - 4.7n$$

and

$$R(0.5d) = R1 + 3n.$$

The RSSI results obtained for the numerical example performed for $\gamma$-point = [-60, -70, - 80] dBm are shown in Table 1:

| Location | | RSSI [dBm] | γ= -60dBm | | γ = -70dBm | | γ = -80dBm | |
|---|---|---|---|---|---|---|---|---|
| | | | n=2.5 | n=3.5 | n=2.5 | n=3.5 | n=2.5 | n=3.5 |
| R0 | | $γ+3n$ | -53dBm | -50dBm | -63dBm | -60dBm | -73dBm | -70dBm |
| R1 | | $γ$ | -60dBm | -60dBm | -70dBm | -70dBm | -80dBm | -80dBm |
| R2 | | $γ - 3n$ | -67dBm | -70dBm | -77dBm | -80dBm | -87dBm | -90dBm |
| R3 | | $γ - 4.7n$ | -72dBm | -76dBm | -82dBm | -84dBm | -92dBm | <95dm |
| high MCS zone | | >= -67 dBm | Ends around 2nd | Ends 1st ~ 2nd | Ends midpoint ~ 1st (1st Cond.) | Ends Midpoint ~ 1st (1st Cond.) | Ends Before midpoint | Ends Before midpoint |
| Stick zone >= β | Device type A spontaneous roaming | -70 dBm | 2nd ~ 3rd | around 2nd | Around 1st (2nd Cond.) | Around 1st (2nd Cond.) | Before midpoint | Around midpoint |
| | Device type C trigger for roaming | -77 dBm | after 3rd | after 3nd | Around 2nd (2nd Cond.) | 1st ~ 2nd (2nd Cond.) | before 1st | 1st ~ 2nd |
| | Device type B spontaneous roaming | -85 dBm | after 3rd | after 3rd | after 3rd | after 3rd | 1nd ~ 2rd | 2nd ~ 3rd |

Table 1

Table 1 shows the RSSI levels at midpoint R0 and at immediate AP's R1, R2 and R3 as well as the RSSI levels for the high MCS zone and for the sticky zone depending on different client's roaming levels: device type A spontaneous roaming, device type C trigger for roaming and device type B spontaneous roaming.

For γ-point = -60 dBm

When γ-point = -60 dBm, the sticky zone may have a large area. Table 1 shows that the wireless client 501 would roam after passing the third immediate AP S3 505. Table 1 shows the grayed cells showing the client would not roam even after passing the third immediate AP S3 505. For this value of γ-point, the second predetermined condition for achieving a balance between maximizing high MCS zone and minimizing sticky zone, i.e. the wireless client should roam into a first immediate AP before the wireless client coming within range of a second immediate AP would not be satisfied.

<u>For γ-point = -80 dBm</u>

When γ-point = -80 dBm, the high MCS zone may be too small. Table 1 shows the high MCS zone ending even before the midpoint R0 between the reference AP r 502 and the first immediate AP S1503. For this value of γ-point, the first predetermined condition for optimization of a balance between maximizing high MCS zone and minimizing sticky zone, i.e. the wireless client 501 in the wireless network 500 may be within a high MCS zone, i.e. there should not be high MCS holes in the network, would not be satisfied when the wireless client 501 is located at the midpoint R0 between the reference AP r 502 and the first immediate AP S1 503. Table 1 shows grayed cells showing the high MCS zone ending even before the midpoint R0 towards the first immediate AP S1 503.

<u>For v-point = -70 dBm</u>

When γ-point=-70 dBm, the first predetermined condition for the high MCS zone (no high MCS holes within the network) could be satisfied as it is shown in this section of Table 1.

| Location | RSSI [dBm] | γ=-70dBm | |
|---|---|---|---|
| | | n=2.5 | n=3.5 |
| high MCS zone | >= -67dBm | Ends Midpoint ~ 1st **(1st Cond.)** | Ends midpoint ~ 1st **(1st Cond.)** |

When γ-point=-70 dBm the second predetermined condition could also be satisfied. When the wireless client 501 moves away from the AP r 502, the client may be able to roam spontaneously for device type A spontaneous roaming and forcefully for device type C trigger for roaming as it is shown in this section of Table 1:

| Location | | RSSI [dBm] | γ=-70dBm | |
|---|---|---|---|---|
| | | | n=2.5 | n=3.5 |
| sticky zone >= β | Device type A spontaneous roaming | -70dBm | around 1st **(2nd Cond.)** | around 1st **(2nd Cond.)** |
| | Device type C trigger for roaming | -77dBm | around 2nd **(2nd Cond.)** | 1st ~ 2nd **(2nd Cond.)** |

Hence, γ-point = -70 dBm can be the γ-point from γ-point = [-60, -70, -80] dBm that could satisfy the first predetermined condition and the second predetermined condition as shown in Table 1.

The above numerical example shows that when we consider three choices of γ-point, γ-point could be targeted around -70dBm, not around -60 or -80 dBm in order to satisfy the first and the second predetermined conditions.

A numerical example of three possible values of γ-point that could satisfy the first and the second predetermined conditions has been considered. Indeed, in another example, more γ-point values could be considered, i.e. a wider range of γ-point values could be analyzed. Roughly speaking, the stickier an operator of the network that configures the network would want his wireless clients to be, the smaller the γ-point should be.

More precisely, a suitable range of γ-point values should be comprised within [-65, -74] dBm based on the numerical example already shown:

If γ-point < -74 dBm, then the midpoint R0 between the reference AP r 502 and the first immediate AP S1 503 may not be part of the high MCS zone. If the APs have the same EIRP as in this numerical example, this means there may exist a high MCS hole in the network.

If γ-point > -65 dBm, sticky zone may be too wide. The device type C trigger for roaming may not kick in until the wireless client 501 passes the third immediate AP S3 505, which might be too far.

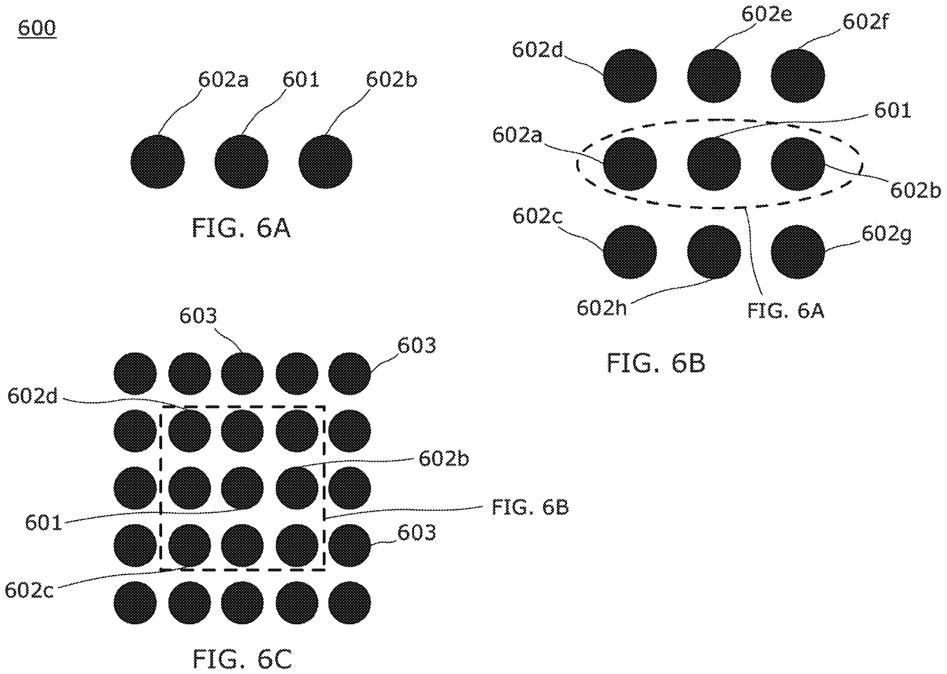

In this part of the disclosure, the concept of proximity neighbors of a reference AP in a network shall be specified. Proximity neighbors λ of a reference AP can be defined as the first neighbors its imaginary wireless client may get close geometrically while it moves radially or linearly away from the reference AP. The number of proximity neighbors λ of a reference AP may depend on the network topology and on the reference AP location within the network. A proximity neighbor can be a first-hop neighbor. FIGS. 6A and 6B show different scenarios for proximity neighbors in examples of network topologies according to the present disclosure.

FIG. 6A shows a segment of the example network topology where a reference AP 601 is shown together with two proximity AP neighbors 602a and 602b in a linear distribution. When the network can be deployed as a linear topology as shown in FIG. 6A, the number of proximity neighbors may be a maximum of $\lambda=2$. Hence, a maximum value of $\lambda=2$ can be chosen for a linear network topology as shown in FIG. 6A when the reference AP is AP 601.

FIG. 6B shows the segment represented in previously FIG. 6A included within a planar regular grid topology. In the example topology shown in FIG. 6A, the reference AP 601 has proximity neighbors $\lambda=8$ with references 602a, 602b, 602c... 602h. In another example, if the reference AP was 602d, this reference AP would have proximity AP neighbors $\lambda=3$ with neighbors AP's 602a, 601 and 602e. When the network can be deployed as regular grid on a two-dimensional plane as shown in FIG. 6B, the maximum number of proximity neighbors may be $\lambda=8$. The network topology of FIG.6A is shown as part of the network topology of FIG.6B. Hence, a maximum value of $\lambda=8$ can be chosen for a planar regular grid network topology as shown in FIG. 6B when the reference AP is AP 601.

A neighbor of an AP can be an AP that the former can hear frames from or any other AP within the network topology. FIG. 6C shows the total number of AP neighbors K in an example of a planar regular grid network topology according to the present disclosure. The network topology of FIG.6B is shown as part of the network topology of FIG.6C.

FIG. 6C shows the total number of AP neighbors K that complete the example wireless network topology. In this example, K=25 neighbors and proximity neighbors $\lambda=8$ when the reference AP is AP 601. The remaining neighbors of the network that are not proximity neighbors can be represented by reference 603. It should be noted that the reference AP 601 can be the access point to which a wireless client has a connection established in a first instance.

For three-dimensional network topologies with three-dimensional roaming, the number of proximity neighbors may change depending on the density and distribution of the AP's within the three-dimensional topology.

Based on the proximity neighbors A, the total number of AP neighbors K, the path-loss and the choice of $\gamma$-point that should satisfy the first and the second predetermine conditions (i.e. achieving a balance between maximizing the high MCS zone and minimizing the sticky zone), a control for EIRP control has been determined:

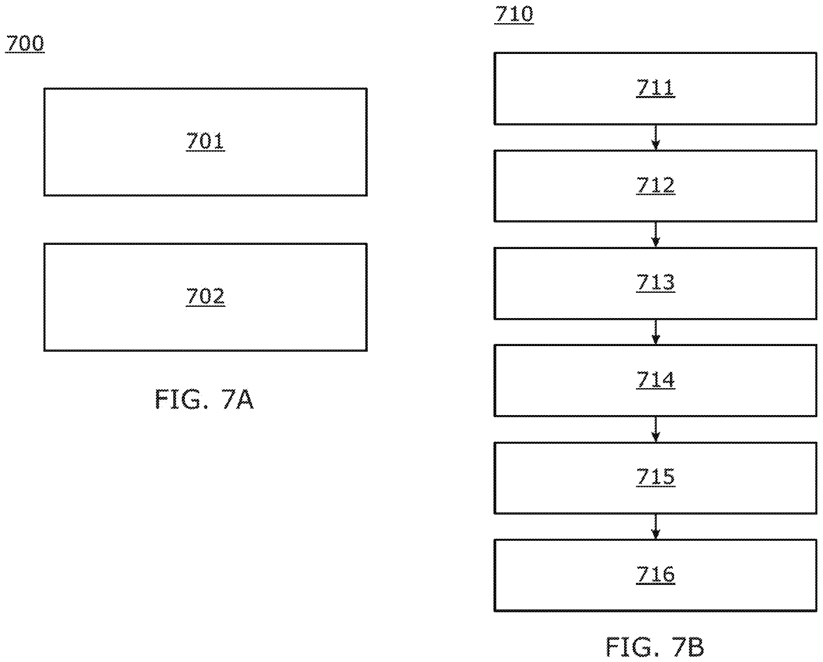

The network topology of the wireless network 500 shown in FIG.5 having the reference AP r 502, the first immediate AP S 503 and the second immediate AP S 504 can be used as example to show the blocks of an example of a process 700 according to the present disclosure shown in FIG. 7A:

In block 701 of FIG. 7A a RSSI level for reference AP r 502 can be calculated when predetermined conditions are satisfied. The RSSI level can be the $\gamma$-point. Block 701 can calculate the RSSI level for the reference AP r 502 when the wireless client 501 can be within range of the first immediate AP S 503 location. In this example of the process 700 according to the present disclosure, the calculated RSSI level should satisfy the first and the second predetermined condition for achieving a balance between maximizing the high MCS zone and minimizing the sticky zone. In particular, the wireless client 501 may be within a high MCS zone of an AP within the network 500 and the wireless client 501 may have roamed to the first immediate AP S 503 but may not have come within range of the second immediate AP 504.

In particular, for this example, the calculated RSSI level should cause the wireless client 501 to be at least within a high MCS zone. It should be noted that with a greater value of $\gamma$-point, the high MCS zone of the reference AP r 502 and a high MCS zone of the first immediate AP S 503 may overlap. Hence, the first predetermined condition would also be satisfied. Furthermore, the calculated RSSI level should also satisfy the second predetermined condition by permitting or causing the wireless client 501 to roam before reaching the second immediate AP $S$ 504. The RSSI level can be calculated by a network element within the wireless network as, e.g. the reference AP r 502. In other examples, the RSSI level can be calculated by a network operator.

In block 702 of FIG. 7A an $EIRP_r$ value for the reference AP r 502 can be calculated such that the wireless client 501 can measure the RSSI level calculated in block 701 when the wireless client 501 may be within range of the first immediate AP S 503. The $EIRP_r$ value can be the power of the reference AP r 502 when the wireless client 501 measures the calculated RSSI within range of the first immediate AP S 503. The $EIRP_r$ value can be calculated by a network element within the wireless network as, e.g. the reference AP r 502. In other examples, the $EIRP_r$ value can be calculated by a network operator.

Calculating the $EIRP_r$ may be based on a measured path-loss between the reference AP r 502 and the first immediate AP S 503. The path-loss may be measured by a network element within the wireless network as, e.g. the reference AP r 502. In other examples, the path-loss can be measured between the reference AP and any other AP neighbor within the network.

The network topology shown in FIG. 6C can be used as example to show the blocks of an example of a process 710 according to the present disclosure shown in FIG. 7B.

In block 711, the reference AP 601 may calculate a RSSI level for one of the immediate neighbors, e.g. an immediate AP neighbor 602d. The RSSI level can be the $\gamma$-point when predetermined conditions are satisfied. Hence, the reference AP 601 may calculate the RSSI level based on the numerical example previously shown in the present disclosure that can achieve the balance between maximizing the high MCS zone and minimizing the sticky zone within the network topology shown in FIG. 6C.

In block 712, the reference AP 601 may detect the value of proximity neighbors $\lambda$ of the network topology shown in FIG. 6C. In another example, the value of proximity neighbors $\lambda$ may be chosen by a network operator or another AP in the network. Value $\lambda$ can represent the number of the most immediate AP neighbors into which a wireless client may roam from the reference AP 601. For the example network topology shown in FIG. 6C with the reference AP 601 to which the process 710 will be applied, proximity neighbors $\lambda$ can be 8. Hence, reference AP 601 would have proximity neighbors 602a, 602b, 602c, 602d, 602e, 602f, 602g and 602h. By default, proximity neighbors could be $\lambda$=8 for further examples of grid network topologies.

In block 713, the reference AP 601 shown in the network topology of FIG. 6C may measure a path-loss $L_\lambda$ to its eight AP neighbors (602a-602h) and sort them in increasing order. In other examples, the path-loss $L_\lambda$ values may be averaged. In further examples, the greater path-loss $L_\lambda$ value or the smallest path-loss $L_\lambda$ value may be considered. This choice may depend on arbitrary decisions as e.g. the network operator's criterion or the AP predetermined configuration.

In block 714, the reference AP 601 within the network topology 600 shown in FIG. 6C may detect the total number of AP neighbors K=25 within the network topology 600. This value may also be provided by the network operator or by other network element within the network topology 600 as for example the reference another AP.

In block 715, the path-loss value $L_K$ to the K-th AP neighbor can be measured by the reference AP 601 shown in the network topology of FIG. 6C. In this example, the K-th AP neighbors could be the AP's 603 that complete the total number of AP's neighbors within the example network topology 600.

Hence, the final path-loss L* can be defined as:

$$L^* := L_\lambda \text{ if } \lambda \leq K$$

$$L^* := L_K \text{ otherwise}$$

For this example, $L^* := L_\lambda$ being $L_\lambda$ the greater value of path-loss measured out of the eight path-loss measurements obtained under block 713. Otherwise, $L_\lambda$ may be another path-loss measurement associated with the measurements carried out under block 713 as previously mentioned.

In block 716 the radio's best $EIRP_r$ for the reference AP 601 for the example network topology shown in FIG. 6C may be calculated by the reference AP 601 or by a network operator as :

$$T^* = L^* + \gamma_{point}$$

$$T^* = L_\lambda + \gamma_{point} \quad (\lambda \leq K)$$

Otherwise:

$$T^* = L_K + \gamma_{point}$$

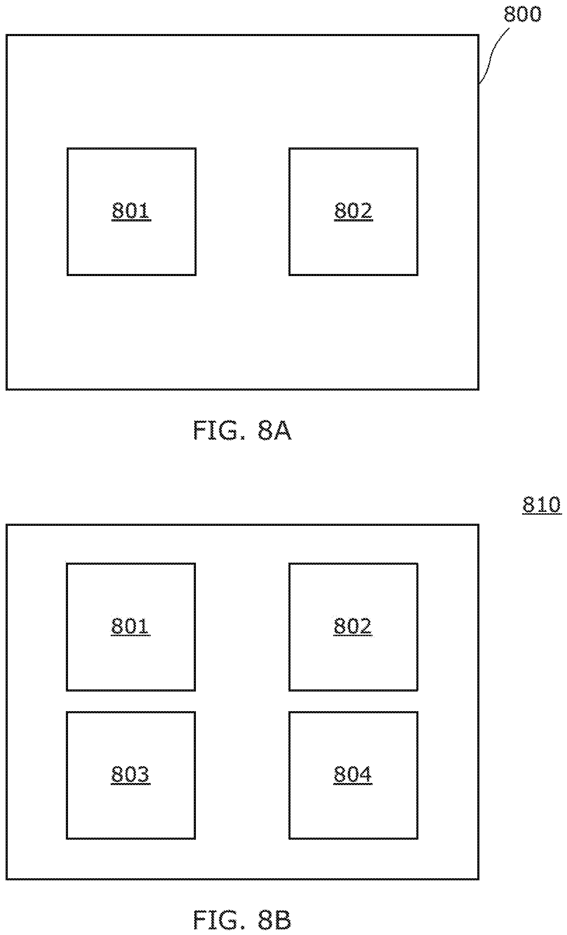

FIG. 8A shows an AP 800 that could be specified as a reference AP according to an example of the present disclosure comprising a RSSI level calculation module 801 and an EIRP adjusting module 802.

In FIG. 8A and FIG.s 8B, the RSSI level calculation module 801 can carry out blocks 701 and 711 previously mentioned. The EIRP adjusting module 802 can carry out blocks 702 and 716 previously mentioned.

FIG. 8B shows an AP 810 that could be specified as a reference AP according to another example of the present disclosure comprising the RSSI level calculation module 801, the EIRP adjusting module 802 an AP neighbors detector module 803 and a path-loss measurement module 804.

AP 810 comprises the AP neighbors detector module 803 that can carry out blocks 712 and 714 and the path-loss measure module 804 that can carry out blocks 713 and 715. The total number of AP neighbors K and the proximity AP neighbors $\lambda$ can be detected by the AP neighbors detector module 803. In one example, the total number of AP neighbors K and the proximity AP neighbors $\lambda$ may be values chosen or provided by the network operator. The AP neighbors detector module 803 may comprise an RFID detector that can detect the presence of proximity AP neighbors $\lambda$ and the total number of AP neighbors K in the wireless network. Other types of detectors may be considered to be implemented within the AP neighbors detector module 803.

Thus, a control EIRP coverage design that may be implemented in wireless networks that consider the mentioned predetermined conditions for optimization of airtime usage has been described in the present disclosure.

**Claims**

1.  A method (700) comprising:

    calculating (701), by a network element or a network operator of a wireless network, when predetermined conditions are satisfied, a Received Signal Strength Indicator (RSSI) level for a reference access point in the network, wherein the network includes a first immediate access point and a wireless client connected to the reference access point;

    calculating (702), by a network element or a network operator of a wireless network, an Equivalent Isotropic Radiated Power (EIRP) of the reference access point such that the wireless client measures the calculated RSSI level when the wireless client is within range of the first immediate access point,

    the method **characterized in that** calculating the EIRP is based on a measured path-loss between the reference access point and the first immediate access point and on measuring a high Modulation and Coding Scheme (MCS) zone of the reference access point and a sticky zone of the first immediate access point, the sticky zone comprising an area where the signal from the first immediate access point at the wireless client is at a higher RSSI level than a roaming level while the wireless client remains connected to the reference access point, wherein the predetermined conditions are satisfied when:

    the wireless client is within a high MCS zone of the reference access point within the network, wherein a high MCS comprises MCS7, MCS8 or MCS9 and/or a zone where the measured RSSI threshold at the wireless client is greater than or equal to -67dBm and

    the wireless client has roamed to the first immediate access point but has not come within range of a second immediate access point.

2.  The method of claim 1 wherein calculating the RSSI level comprises calculating a range of RSSI levels that includes the RSSI level.

3.  The method of claim 1 wherein the wireless client roams to the first immediate access point by forcefully roaming when achieving a predetermined RSSI level.

4.  The method of claim 1 wherein calculating the EIRP of the reference access point includes adding the calculated RSSI level to the measured path-loss.

5.  The method of claim 1 further comprising:
    distributing the reference access point linearly with respect to the first and the second immediate access points, wherein the inter-access point distance is fixed; or distributing the reference access point radially with respect to the first and the second immediate access points, wherein the inter-access point distance is fixed.

6.  The method of claim 1 wherein the predetermined conditions are satisfied when a high MCS hole is avoided in the network.

7.  A reference access point (800) for a wireless network comprising:

    a Received Signal Strength Indicator (RSSI) level calculator module (801) configured to calculate a RSSI level when predetermined conditions are satisfied; and

    an adjusting module (802) configured to adjust an Equivalent Isotropic Radiated Power (EIRP) of the reference access point,

    wherein the adjusted EIRP permits a wireless client to measure the calculated RSSI level within the range of a first immediate access point,

    **characterized in that** the adjusting module is configured to adjust the EIRP based on a measured path-loss between the reference access point and the first immediate access point, and on a measured high MCS zone of the reference access point and a sticky zone of the first immediate access point, the sticky zone comprising an area where the signal from the first immediate access point at the wireless client is at a higher RSSI level than a roaming level while the wireless client remains connected to the reference access point, wherein the predetermined conditions are satisfied when:

    the wireless client is within a high MCS zone of the reference access point, wherein a high MCS comprises MCS7, MCS8 or MCS9 and/or a zone where the measured RSSI threshold at the wireless client is greater than or equal to -67dBm, and
the wireless client has roamed to the first immediate access point but has not come within range of a second immediate access point.

8. The access point of claim 7 wherein the RSSI level calculator module is to obtain the RSSI level from a range of RSSI levels calculated by the access point.

9. The access point of claim 7 comprising a detection module to detect access points within the network.

10. The access point of claim 9 comprising a measuring module to measure the path-loss between the access points, wherein the measure of the path-loss is related to the detected access points.

11. The access point of claim 7 wherein the adjusting module is to adjust the EIRP of the access point in a network with a three dimensional topology.

12. A non-transitory machine-readable storage medium encoded with instructions executable by a processor, the machine-readable storage medium comprising:

instructions to calculate, when predetermined conditions are satisfied, a Received Signal Strength Indicator (RSSI) level for a reference access point (102) in a wireless network (100), wherein the network further includes a first neighbor access point and a wireless client connected to the reference access point;
instructions to calculate an Equivalent Isotropic Radiated Power (EIRP) of the reference access point such that the wireless client measures the calculated RSSI level when the wireless client is within range of the first neighbor access point (103),
**characterized in that** calculating the EIRP is based on adding a path-loss value measured between the reference access point and the first neighbor access point to the RSSI level, and on a measured high MCS zone (105) of the reference access point and a sticky zone of the first neighbor access point, the sticky zone comprising an area where the signal from the neighbor access point at the wireless client is at a higher RSSI level than a roaming level while the wireless client remains connected to the reference access point,
wherein the predetermined conditions are satisfied when:

the wireless client is within a high MCS zone of the reference access point within the network, wherein a high MCS comprises MCS7, MCS8 or MCS9 and/or a zone where the measured RSSI threshold at the wireless client is greater than or equal to -67dBm, and
the wireless client has roamed to the first neighbor access point but has not come within range of a second neighbor access point.

13. The non-transitory machine-readable storage medium of claim 12 comprising instructions to measure the path-loss value between the access point and the first neighbor access point.

14. An access point, comprising the non-transitory machine readable storage medium of claim 12 or 13.

15. A system comprising a reference access point for a wireless network, a wireless client and a first immediate access point;
wherein the reference access point comprises a Received Signal Strength Indicator (RSSI) level calculator module (801) configured to calculate a RSSI level when predetermined conditions are satisfied; and
an adjusting module (802) configured to adjust an Equivalent Isotropic Radiated Power (EIRP) of the reference access point,
wherein the adjusted EIRP permits the wireless client to measure the calculated RSSI level within the range of the first immediate access point,
**characterized in that** the adjusting module is configured to adjust the EIRP based on a measured path-loss between the reference access point and the first immediate access point, and on a measured high MCS zone of the reference access point and a sticky zone of the first immediate access point, the sticky zone comprising an area where the signal from the first immediate access point at the wireless client is at a higher RSSI level than a roaming level while the wireless client remains connected to the reference access point,
wherein the predetermined conditions are satisfied when:

the wireless client is within a high MCS zone of the reference access point, wherein a high MCS comprises MCS7, MCS8 or MCS9 and/or a zone where the measured RSSI threshold at the wireless client is greater than or equal to -67dBm, and
the wireless client has roamed to the first immediate access point but has not come within range of a second immediate access point.

**Patentansprüche**

1. Verfahren (700), Folgendes umfassend:

   Berechnen (701) eines Pegels für einen empfangenen Signalstärkeindikator (*Received Signal Strength Indicator*- RSSI) für einen Referenzzugriffspunkt in dem Netzwerk durch ein Netzwerkelement oder einen Netzwerkbetreiber eines drahtlosen Netzwerks, wenn vorbestimmte Bedingungen erfüllt sind, wobei das Netzwerk einen ersten unmittelbaren Zugriffspunkt und einen drahtlosen Client umfasst, der mit dem Referenzzugriffspunkt verbunden ist;
   Berechnen (702) einer äquivalenten isotropen Strahlungsleistung (*Equivalent Isotropie Radiated Power* - EIRP) des Referenzzugriffspunkts durch ein Netzwerkelement oder einen Netzwerkbetreiber eines drahtlosen Netzwerks, sodass der drahtlose Client den berechneten RSSI-Pegel misst, wenn sich der drahtlose Client in Reichweite des ersten unmittelbaren Zugriffspunkt befindet,
   wobei das Verfahren **dadurch gekennzeichnet ist, dass** das Berechnen der EIRP auf einem gemessenen Pfadverlust zwischen dem Referenzzugriffspunkt und dem ersten unmittelbaren Zugriffspunkt und auf dem Messen einer Zone mit hohem Modulations- und Codierungsschema (MCS) des Referenzzugriffspunkts und einer klebrigen Zone des ersten unmittelbaren Zugriffspunkts basiert ist, wobei die klebrige Zone einen Bereich umfasst, in dem sich das Signal von dem ersten unmittelbaren Zugriffspunkt des drahtlosen Clients auf einem höheren RSSI-Pegel als ein Roaming-Pegel befindet, während der drahtlose Client mit dem Referenzzugriffspunkt verbunden bleibt,
   wobei die vorbestimmten Bedingungen erfüllt sind, wenn:

   der drahtlose Client sich innerhalb einer Zone mit hohem MCS des Referenzzugriffspunkts innerhalb des Netzwerks befindet, wobei ein hohes MCS MCS7, MCS8 oder MCS9 und/oder eine Zone umfasst, in der der gemessene RSSI-Schwellenwert an dem drahtlosen Client wenigstens -67 dBm entspricht, und
   der drahtlose Client zu dem ersten unmittelbaren Zugriffspunkt gewechselt hat, sich jedoch nicht in Reichweite eines zweiten unmittelbaren Zugriffspunkt befindet.

2. Verfahren nach Anspruch 1, wobei das Berechnen des RSSI-Pegels das Berechnen eines Bereichs von RSSI-Pegeln umfasst, der den RSSI-Pegel beinhaltet.

3. Verfahren nach Anspruch 1, wobei der drahtlose Client zu dem ersten unmittelbaren Zugriffspunkt durch zwangsweises Roaming wechselt, wenn ein vorbestimmter RSSI-Pegel erreicht wird.

4. Verfahren nach Anspruch 1, wobei das Berechnen der EIRP des Referenzzugriffspunkts das Hinzufügen des berechneten RSSI-Pegels zu dem gemessenen Pfadverlust beinhaltet.

5. Verfahren nach Anspruch 1, ferner Folgendes umfassend:
   lineares Verteilen des Referenzzugriffspunkts in Bezug auf den ersten und den zweiten unmittelbaren Zugriffspunkt, wobei der Abstand zwischen Zugriffspunkten festgelegt ist; oder radiales Verteilen des Referenzzugriffspunkts in Bezug auf den ersten und den zweiten unmittelbaren Zugriffspunkt, wobei der Abstand zwischen Zugriffspunkten festgelegt ist.

6. Verfahren nach Anspruch 1, wobei die vorbestimmten Bedingungen erfüllt sind, wenn ein Loch mit hohem MCS in dem Netzwerk vermieden wird.

7. Referenzzugriffspunkt (800) für ein drahtloses Netzwerk, Folgendes umfassend:

   ein Pegelberechnungsmodul (801) für einen empfangenen Signalstärkeindikator (RSSI), das konfiguriert ist, um einen RSSI-Pegel zu berechnen, wenn vorbestimmte Bedingungen erfüllt sind; und ein Einstellmodul (802), das konfiguriert ist, um eine äquivalente isotrope Strahlungsleistung (EIRP) des Referenzzugriffspunkts anzupassen,

wobei die angepasste EIRP erlaubt, dass ein drahtloser Client den berechneten RSSI-Pegel innerhalb des Bereichs eines ersten unmittelbaren Zugriffspunkts misst,

**dadurch gekennzeichnet, dass** das Anpassungsmodul konfiguriert ist, um die EIRP auf Grundlage eines gemessenen Pfadverlusts zwischen dem Referenzzugriffspunkt und dem ersten unmittelbaren Zugriffspunkt und einer gemessenen Zone mit hohem MCS des Referenzzugriffspunkts und einer klebrigen Zone des ersten unmittelbaren Zugriffspunkts anzupassen, wobei die klebrige Zone einen Bereich umfasst, in dem sich das Signal von dem ersten unmittelbaren Zugriffspunkt des drahtlosen Clients auf einem höheren RSSI-Pegel als ein Roaming-Pegel befindet, während der drahtlose Client mit dem Referenzzugriffspunkt verbunden bleibt, wobei die vorbestimmten Bedingungen erfüllt sind, wenn:

der drahtlose Client sich innerhalb einer Zone mit hohem MCS des Referenzzugriffspunkts befindet, wobei ein hohes MCS MCS7, MCS8 oder MCS9 und/oder eine Zone umfasst, in der der gemessene RSSI-Schwellenwert an dem drahtlosen Client wenigstens -67 dBm entspricht, und

der drahtlose Client zu dem ersten unmittelbaren Zugriffspunkt gewechselt hat, sich jedoch nicht in Reichweite eines zweiten unmittelbaren Zugriffspunkt befindet.

8. Zugriffspunkt nach Anspruch 7, wobei das Pegelberechnungsmodul für den RSSI den RSSI-Pegel aus einem Bereich von RSSI-Pegeln erhalten soll, die durch den Zugriffspunkt berechnet werden.

9. Zugriffspunkt nach Anspruch 7, umfassend ein Erfassungsmodul zum Erfassen von Zugriffspunkten innerhalb des Netzwerks.

10. Zugriffspunkt nach Anspruch 9, umfassend ein Messmodul zum Messen des Pfadverlusts zwischen den Zugriffspunkten, wobei die Messung des Pfadverlusts auf die erfassten Zugriffspunkte bezogen ist.

11. Zugriffspunkt nach Anspruch 7, wobei das Anpassungsmodul die EIRP des Zugriffspunkts in einem Netzwerk mit einer dreidimensionalen Topologie anpassen soll.

12. Nichtflüchtiges maschinenlesbares Speichermedium, das mit Anweisungen codiert ist, die von einem Prozessor ausführbar sind, wobei das maschinenlesbare Speichermedium Folgendes umfasst:

Anweisungen, um, wenn vorbestimmte Bedingungen erfüllt sind, einen Pegel für einen empfangenen Signalstärkeindikator (RSSI) für einen Referenzzugriffspunkt (102) in einem drahtlosen Netzwerk (100) zu berechnen, wobei das Netzwerk ferner einen ersten benachbarten Zugriffspunkt und einen drahtlosen Client beinhaltet, der mit dem Referenzzugriffspunkt verbunden ist;

Anweisungen, um eine äquivalente isotrope Strahlungsleistung (EIRP) des Referenzzugriffspunkts zu berechnen, sodass der drahtlose Client den berechneten RSSI-Pegel misst, wenn sich der drahtlose Client innerhalb der Reichweite des ersten benachbarten Zugriffspunkts (103) befindet,

**dadurch gekennzeichnet, dass** das Berechnen der EIRP auf dem Hinzufügen eines zwischen dem Referenzzugriffspunkt und dem ersten benachbarten Zugriffspunkt gemessenen Pfadverlustwerts zu dem RSSI-Pegel und auf einer gemessenen Zone (105) mit hohem MCS des Referenzzugriffspunkts und einer klebrigen Zone des ersten benachbarten Zugriffspunkts basiert, wobei die klebrige Zone einen Bereich umfasst, in dem das Signal von dem benachbarten Zugriffspunkt an dem drahtlosen Client auf einem höheren RSSI-Pegel als ein Roaming-Pegel ist, während der drahtlose Client mit dem Referenzzugriffspunkt verbunden bleibt, wobei die vorbestimmten Bedingungen erfüllt sind, wenn:

der drahtlose Client sich innerhalb einer Zone mit hohem MCS des Referenzzugriffspunkts innerhalb des Netzwerks befindet, wobei ein hohes MCS MCS7, MCS8 oder MCS9 und/oder eine Zone umfasst, in der der gemessene RSSI-Schwellenwert an dem drahtlosen Client wenigstens -67 dBm entspricht, und

der drahtlose Client zu dem ersten benachbarten Zugriffspunkt gewechselt hat, sich jedoch nicht in Reichweite eines zweiten benachbarten Zugriffspunkt befindet.

13. Nichtflüchtiges maschinenlesbares Speichermedium nach Anspruch 12, Anweisungen zum Messen des Pfadverlustwerts zwischen dem Zugriffspunkt und dem ersten benachbarten Zugriffspunkt umfassend.

14. Zugriffspunkt, das nichtflüchtige maschinenlesbare Speichermedium nach Anspruch 12 oder 13 umfassend.

**15.** System, einen Referenzzugriffspunkt für ein drahtloses Netzwerk, einen drahtlosen Client und einen ersten unmittelbaren Zugriffspunkt umfassend;

wobei der Referenzzugriffspunkt ein Pegelberechnungsmodul (801) für einen empfangenen Signalstärkeindikator (RSSI) umfasst, das konfiguriert ist, um einen RSSI-Pegel zu berechnen, wenn vorbestimmte Bedingungen erfüllt sind; und

ein Einstellmodul (802), das konfiguriert ist, um eine äquivalente isotrope Strahlungsleistung (EIRP) des Referenzzugriffspunkts anzupassen,

wobei die angepasste EIRP erlaubt, dass der drahtlose Client den berechneten RSSI-Pegel innerhalb des Bereichs des ersten unmittelbaren Zugriffspunkts misst,

**dadurch gekennzeichnet, dass** das Anpassungsmodul konfiguriert ist, um die EIRP auf Grundlage eines gemessenen Pfadverlusts zwischen dem Referenzzugriffspunkt und dem ersten unmittelbaren Zugriffspunkt und einer gemessenen Zone mit hohem MCS des Referenzzugriffspunkts und einer klebrigen Zone des ersten unmittelbaren Zugriffspunkts anzupassen, wobei die klebrige Zone einen Bereich umfasst, in dem sich das Signal von dem ersten unmittelbaren Zugriffspunkt des drahtlosen Clients auf einem höheren RSSI-Pegel als ein Roaming-Pegel befindet, während der drahtlose Client mit dem Referenzzugriffspunkt verbunden bleibt,

wobei die vorbestimmten Bedingungen erfüllt sind, wenn:

der drahtlose Client sich innerhalb einer Zone mit hohem MCS des Referenzzugriffspunkts befindet, wobei ein hohes MCS MCS7, MCS8 oder MCS9 und/oder eine Zone umfasst, in der der gemessene RSSI-Schwellenwert an dem drahtlosen Client wenigstens -67 dBm entspricht, und

der drahtlose Client zu dem ersten unmittelbaren Zugriffspunkt gewechselt hat, sich jedoch nicht in Reichweite eines zweiten unmittelbaren Zugriffspunkt befindet.

**Revendications**

**1.** Procédé (700) comprenant :

le calcul (701), par un élément de réseau ou un opérateur de réseau d'un réseau sans fil, lorsque des conditions prédéterminées sont remplies, d'un niveau d'indicateur de puissance du signal reçu (RSSI) pour un point d'accès de référence dans le réseau, le réseau incluant un premier point d'accès immédiat et un client sans fil connecté au point d'accès de référence ;

le calcul (702), par un élément de réseau ou un opérateur de réseau d'un réseau sans fil, d'une puissance rayonnée isotrope équivalente (PIRE) du point d'accès de référence de sorte que le client sans fil mesure le niveau de RSSI calculé lorsque le client sans fil se trouve à la portée du premier point d'accès immédiat,

le procédé étant **caractérisé en ce que** le calcul de la PIRE est basé sur une perte de trajet mesurée entre le point d'accès de référence et le premier point d'accès immédiat et sur la mesure d'une zone de schéma de modulation et de codage (MCS) élevé du point d'accès de référence et d'une zone de courte portée du premier point d'accès immédiat, la zone de courte portée comprenant une zone dans laquelle le signal du premier point d'accès immédiat au niveau du client sans fil est à un niveau de RSSI supérieur à un niveau d'itinérance tandis que le client sans fil reste connecté au point d'accès de référence,

les conditions prédéterminées étant remplies lorsque :

le client sans fil se trouve dans une zone de MCS élevé du point d'accès de référence à l'intérieur du réseau, un MCS élevé comprenant MCS7, MCS8 ou MCS9 et/ou une zone dans laquelle le seuil de RSSI mesuré au niveau du client sans fil est supérieur ou égal à -67 dBm et

le client sans fil s'est déplacé vers le premier point d'accès immédiat, mais ne se trouve pas à la portée d'un second point d'accès immédiat.

**2.** Procédé selon la revendication 1, dans lequel le calcul du niveau de RSSI comprend le calcul d'une plage de niveaux de RSSI incluant le niveau de RSSI.

**3.** Procédé selon la revendication 1, dans lequel le client sans fil se déplace vers le premier point d'accès immédiat en se déplaçant avec force lorsqu'il atteint un niveau de RSSI prédéterminé.

**4.** Procédé selon la revendication 1, dans lequel le calcul de la PIRE du point d'accès de référence inclut l'ajout du niveau de RSSI calculé à la perte de trajet mesurée.

**5.** Procédé selon la revendication 1, comprenant en outre :
la distribution du point d'accès de référence de manière linéaire par rapport aux premier et second points d'accès immédiats, la distance entre points d'accès étant fixe ; ou la distribution du point d'accès de référence de manière radiale par rapport aux premier et second points d'accès immédiats, la distance entre points d'accès étant fixe.

**6.** Procédé selon la revendication 1, dans lequel les conditions prédéterminées sont remplies lorsqu'un trou de MCS élevé est évité dans le réseau.

**7.** Point d'accès de référence (800) pour un réseau sans fil comprenant :

un module de calculateur de niveau d'indicateur de puissance du signal reçu (RSSI) (801) configuré pour calculer un niveau de RSSI lorsque des conditions prédéterminées sont remplies ; et un module de réglage (802) configuré pour régler une puissance rayonnée isotrope équivalente (PIRE) du point d'accès de référence, la PIRE réglée permettant à un client sans fil de mesurer le niveau de RSSI calculé à la portée d'un premier point d'accès immédiat,
**caractérisé en ce que** le module de réglage est configuré pour régler la PIRE sur la base d'une perte de trajet mesurée entre le point d'accès de référence et le premier point d'accès immédiat, et sur une zone de MCS élevé mesurée du point d'accès de référence et une zone de courte portée du premier point d'accès immédiat, la zone de courte portée comprenant une zone dans laquelle le signal du premier point d'accès immédiat au niveau du client sans fil est à un niveau de RSSI supérieur à un niveau d'itinérance tandis que le client sans fil reste connecté au point d'accès de référence,
les conditions prédéterminées étant remplies lorsque :

le client sans fil se trouve dans une zone de MCS élevé du point d'accès de référence, un MCS élevé comprenant MCS7, MCS8 ou MCS9 et/ou une zone dans laquelle le seuil de RSSI mesuré au niveau du client sans fil est supérieur ou égal à -67 dBm, et
le client sans fil s'est déplacé vers le premier point d'accès immédiat, mais ne se trouve pas à la portée d'un second point d'accès immédiat.

**8.** Point d'accès selon la revendication 7, dans lequel le module de calculateur de niveau de RSSI consiste à obtenir le niveau de RSSI à partir d'une plage de niveaux de RSSI calculés par le point d'accès.

**9.** Point d'accès selon la revendication 7, comprenant un module de détection pour détecter des points d'accès à l'intérieur du réseau.

**10.** Point d'accès selon la revendication 9, comprenant un module de mesure pour mesurer la perte de trajet entre les points d'accès,
la mesure de la perte de trajet étant liée aux points d'accès détectés.

**11.** Point d'accès selon la revendication 7, dans lequel le module de réglage consiste à régler la PIRE du point d'accès dans un réseau avec une topologie tridimensionnelle.

**12.** Support de stockage lisible par machine non transitoire codé avec des instructions exécutables par un processeur, le support de stockage lisible par machine comprenant :

des instructions pour calculer, lorsque des conditions prédéterminées sont remplies, un niveau d'indicateur d'intensité du signal reçu (RSSI) pour un point d'accès de référence (102) dans un réseau sans fil (100), le réseau incluant en outre un premier point d'accès voisin et un client sans fil connecté au point d'accès de référence ;
des instructions pour calculer une puissance rayonnée isotrope équivalente (EIRP) du point d'accès de référence, de sorte que le client sans fil mesure le niveau de RSSI calculé lorsque le client sans fil se trouve à la portée du premier point d'accès voisin (103),
**caractérisé en ce que** le calcul de la PIRE est basé sur l'ajout d'une valeur de perte de trajet mesurée entre le point d'accès de référence et le premier point d'accès voisin au niveau de RSSI, et sur une zone de MCS élevé mesurée (105) du point d'accès de référence et une zone de courte portée du premier point d'accès voisin, la zone de courte portée comprenant une zone dans laquelle le signal du point d'accès voisin au niveau du client sans fil est à un niveau de RSSI supérieur à un niveau d'itinérance tandis que le client sans fil reste connecté au point d'accès de référence,

les conditions prédéterminées étant remplies lorsque :

le client sans fil se trouve à l'intérieur d'une zone de MCS élevé du point d'accès de référence à l'intérieur du réseau, un MCS élevé comprenant MCS7, MCS8 ou MCS9 et/ou une zone dans laquelle le seuil de RSSI mesuré au niveau du client sans fil est supérieur ou égal à -67 dBm, et
le client sans fil s'est déplacé vers le premier point d'accès voisin mais ne se trouve pas à la portée d'un second point d'accès voisin.

13. Support de stockage lisible par une machine non transitoire selon la revendication 12, comprenant des instructions pour mesurer la valeur de perte de trajet entre le point d'accès et le premier point d'accès voisin.

14. Point d'accès, comprenant le support de stockage lisible par machine non transitoire selon la revendication 12 ou 13.

15. Système comprenant un point d'accès de référence pour un réseau sans fil, un client sans fil et un premier point d'accès immédiat ;
le point d'accès de référence comprenant un module de calculateur de niveau d'indicateur d'intensité du signal reçu (RSSI) (801) configuré pour calculer un niveau de RSSI lorsque des conditions prédéterminées sont remplies ; et un module de réglage (802) configuré pour régler une puissance rayonnée isotrope équivalente (PIRE) du point d'accès de référence,
la PIRE réglée permettant au client sans fil de mesurer le niveau de RSSI calculé à la portée du premier point d'accès immédiat,
**caractérisé en ce que** le module de réglage est configuré pour régler la PIRE sur la base d'une perte de trajet mesurée entre le point d'accès de référence et le premier point d'accès immédiat, et sur une zone de MCS élevé mesurée du point d'accès de référence et une zone de courte portée du premier point d'accès immédiat, la zone de courte portée comprenant une zone dans laquelle le signal du premier point d'accès immédiat au niveau du client sans fil est à un niveau de RSSI supérieur à un niveau d'itinérance tandis que le client sans fil reste connecté au point d'accès de référence,
les conditions prédéterminées étant remplies lorsque :

le client sans fil se trouve dans une zone de MCS élevé du point d'accès de référence, un MCS élevé comprenant MCS7, MCS8 ou MCS9 et/ou une zone dans laquelle le seuil de RSSI mesuré au niveau du client sans fil est supérieur ou égal à -67 dBm, et
le client sans fil s'est déplacé vers le premier point d'accès immédiat, mais ne se trouve pas à la portée d'un second point d'accès immédiat.

FIG. 1

EP 3 286 951 B1

**FIG. 2**

200

202 201 210 *a-point* 211 *β-point* 213

Range of Roaming-trigger RSSI

| -61dBm MCS9 802.11ac 40Mhz | -67dBm MCS7 802.11ac 40Mhz | -70dBm device type A spontaneous roaming | -72dBm MCS6 802.11ac 40Mhz | -77dBm device type C trigger for roaming | -85dBm device type B spontaneous roaming | -95dBm noise floor |

*RSSI [dBm]*

**FIG. 3**

300

302 308 301 312 *y-point* 309 311

High MCS Zone    Sticky Zone    *β-point*

200    *a-point*

303    310

*distance [m]*

EP 3 286 951 B1

FIG. 4A

FIG. 4B

EP 3 286 951 B1

500

502    503    504    505

$$d$$

$$d/2$$

$$d$$    $$d$$

$r$    $S_1$    $S_2$    $S_3$

$R_0 = R_1 + 3n$    $R_1$(y-point)    $R_2 = R_1 - 3n$    $R_3 = R_1 - 4.7n$

501

FIG. 5

600

602a   601   602b

FIG. 6A

602d   602e   602f

602a   601

602b

602c

602g

602h   FIG. 6A

FIG. 6B

603

603

602d

602b

601

FIG. 6B

603

602c

FIG. 6C

EP 3 286 951 B1

EP 3 286 951 B1

700

```
┌─────────────────────────────┐
│                             │
│            701              │
│                             │
└─────────────────────────────┘

┌─────────────────────────────┐
│                             │
│            702              │
│                             │
└─────────────────────────────┘
```

FIG. 7A

710

```
┌─────────────────────────────┐
│            711              │
└─────────────────────────────┘
              │
              ▼
┌─────────────────────────────┐
│            712              │
└─────────────────────────────┘
              │
              ▼
┌─────────────────────────────┐
│            713              │
└─────────────────────────────┘
              │
              ▼
┌─────────────────────────────┐
│            714              │
└─────────────────────────────┘
              │
              ▼
┌─────────────────────────────┐
│            715              │
└─────────────────────────────┘
              │
              ▼
┌─────────────────────────────┐
│            716              │
└─────────────────────────────┘
```

FIG. 7B

800

801

802

FIG. 8A

810

801

802

803

804

FIG. 8B

**EP 3 286 951 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016037458 A1